# EUROPEAN PATENT APPLICATION

(11) **EP 3 985 824 A1**
(43) Date of publication of application: **20.04.2022**
(21) Application number: 21202543.1
(22) Date of filing: 13.10.2021
(51) Int. Cl.: H02J 3/14, H02J 13/00

(54) **MOBILE COMMUNICATION BASED LOW-DELAY DISTRIBUTIVE POWER GENERATION SYSTEM ASSISTING SERVICE DEVICE AND METHOD**

(30) Priority: 16.10.2020 TW 109135907
(71) Applicant: Remotek Corporation, New Taipei City 221416 (TW)
(72) Inventor: TSAI, Ming-Chang, 235603 New Taipei City (TW); YAO, Leehter, 106344 Taipei City (TW); TSAI, Men-Shen, 106344 Taipei City (TW); YANG, Chin-Feng, 235603 New Taipei City (TW)
(74) Representative: Wittmann, Günther

(57) **Abstract**

A mobile communication based low-relay distributive power generation system assisting service device and method are disclosed, including at least one control center that includes a time server, a control center server, a frequency detector and at least one communication interface and at least one load-shedding service user end that includes at least one load-shedding control station. The control center uses the frequency detector to detect a frequency of an AC grid power source. When the frequency of the AC grid power source lowers to a predetermined tolerable underfrequency value, and then the control center server carries out load-shedding control command, the communication interface issues, via at least one mobile communication network, at least one load-shedding control command to the load-shedding service user end. Each load-shedding control station of the load-shedding service user end is connected to and controls power supply and cutoff of a local feeder grid power source for at least one user loading. Each load-shedding control station includes at least one mobile communication module and a backup power source device. The mobile communication module receives the load-shedding control command issued from the control center and implements instantaneous low-delay cutback load shedding of the local feeder grid power source for the user loading connected thereto. The backup power source device is operable to selectively provide backup power to the user loading. The control center makes statistics of the load-shedding capacity of each load-shedding control station.

## Description

### BACKGROUND OF THE INVENTION

### 1. Field of the Invention

The present invention relates to a mobile communication based low-delay distributive power generation system assisting service device and method, and in particular to a device and a method in which a frequency detector of a control center and a mobile communication network are used to remotely control at least a load-shedding control station of at least one load-shedding service user end, so as to realize automatic fast load shedding in an underfrequency state of power frequency.

### 2. The Related Arts

A power generation system has to maintain balance between power supply and power demand during normal operation. If the user load capacity is higher than the power supply capacity of power generation, the power generation system frequency would drop, and in a worse condition, the stability and security of a power grid may be damaged. To prevent the power system frequency from unexpectedly lowering, various ways may be applied. One of the known ways is to install an underfrequency protection relay to execute load shedding or circuit breaking according to given conditions, so as to prevent continuous lowering of frequency and thus protecting the entire power grid. There are strict requirements for the frequency trigger point and the activation timing of the underfrequency relay. For example, Taipower^{®} company, which is a utility service company of Taiwan, provides assisting service regulations for Fast Response load-shedding Resource (FRR), requiring in a low-frequency state of power frequency that is 59.7 Hz, load shedding must be executed in a time period less than one second. Also, it is provided in the document "Primary Frequency Response and Control of Power System Frequency" of Energy Analysis and Environmental Impacts Division Lawrence Berkley National Laboratory, LBNL-2001105, published by John Undrill, in Section 13 that provides load shedding as primary control action, Section 13.1 provides programmed load shedding that discloses in an underfrequency state of the power frequency being 59.7 Hz, load shedding must be executed in a time period of 1-3 seconds. Such known regulations and methods for underfrequency load shedding may effectively protect a power grid, yet the shortcoming is that unexpected widespread blackouts may be caused when such regulations and methods are equipped without backup power source device, resulting in troubles and inconvenience for the users at the user ends.

Patent documents in this field are known. For example, Taiwan Patent No. 1411192 discloses an electrical power protection system and method, which provide load shedding applicable to multiple power plants and transforming stations. A decision-making center (10) receives various states and alarm detections for protection of various power systems, supplied from each of detectors (111)-(115) of each of remote monitoring stations (11)-(15), such detection signals being transmitted to the decision-making center (10), so that the decision-making center (10) may decide which one of the remote monitoring stations (11)-(15) needs to do load shedding (power tripping). However, in this document, each of the remote monitoring stations (11)-(15) requires installation of expensive and sophisticated detectors (111)-(115). This increases the installation cost, making it not economically efficient. This mode is also not applicable to user end load shedding, either in an active way or a non-active way, and thus, there may need extra equipment for remote monitoring stations (11)-(15) and detectors (111)-(115). This makes it is even harder and more complicated to implement signal transmission for the detectors (111)-(115) and issuance of commands from the decision-making center (10). Consequently, the system and method provided in the patent document is only applicable to processing and control of load shedding between the power plants and the transforming stations, and thus lowering the industrial value thereof.

In addition, Taiwan Utility Model No. M578044, which provides a structure that allows each utility user not to completely black out in case of insufficiency of power supply or outages, and Chinese Patent No. CN1938920, which provides a underfrequency load-shedding protection system, respectively disclose typical an underfrequency load shedding technique applicable to a user end and an underfrequency load-shedding technique applied between user ends and transforming stations. Similarly, it is required to install, in each of the user ends, an underfrequency relay set (20) and an underfrequency horizontal inspection unit (20a)-(20d). Thus, they suffer the same shortcomings and drawbacks of the known power underfrequency load-shedding system and the prior art patent document discussed above, such as high installation cost and thus economic inefficiency, and being inapplicable to active load-shedding control of the user ends. Particularly, when the number of the user ends increases, the number and thus cost of the underfrequency relay set (20) and the underfrequency horizontal inspection unit (20a)-(20d) are proportionally increased. This makes control of load shedding even more complicated, and the cost of installation higher. Further, there are also problems of blackouts resulting from unexpected load shedding.

### SUMMARY OF THE INVENTION

The primary objective of the present invention is to provide a mobile communication based low-delay distributive power generation system assisting service device and method, which can effectively eliminate the problems and drawbacks involved in the above-described power underfrequency load-shedding system and the patent document that additional underfrequency inspection equipment must be installed in the user end and thus the installation cost is dramatically increased, and also suffering being not applicable to active load shedding at the user ends, control of load shedding being made complicated, the installation cost being even higher, and unexpected widespread blackouts resulting from load shedding.

Thus, the present invention provides a mobile communication based low-relay distributive power generation system assisting service device, which comprises:
at least one control center, which comprises a time server, a control center server, a frequency detector and at least one communication interface, wherein the frequency detector is connected to an alternate-current (AC) grid power source to detect a frequency of the AC grid power source, so that when the frequency of the AC grid power source lowers to a predetermined tolerable underfrequency value, and then the control center server carries out load-shedding control command, the communication interface issues, through at least one mobile communication network, at least one load-shedding control command; and
at least one load-shedding service user end, wherein the load-shedding service user end comprises at least one load-shedding control station, each load-shedding control station being connected to and controlling power supply and circuit breaker for at least one local feeder grid power source of user loading, each load-shedding control station comprising at least one mobile communication module and a backup power source device, so that the mobile communication module is operable to receive the load-shedding control command from the control center and to implement immediate and low-delay cutback load-shedding on the at least one local feeder grid power source for the user loading connected thereto, and allowing the backup power source device to supply electric power to the user loading.

Further, in the mobile communication based low-relay distributive power generation system assisting service device according to the present invention, the control center further comprises:
a frequency detector, which is connected to the AC grid power source to detect the frequency of the AC grid power source and output a frequency signal;
at least one control center server, which is connected to the frequency detector to receive the frequency signal output from the frequency detector, wherein when the frequency of the AC grid power source to which the frequency signal corresponds lowers to the predetermined tolerable underfrequency value, the control center server outputs at least one load-shedding control command;
at least one communication interface, which is connected to the control center server to receive the load-shedding control command output from the control center server and to transmit the load-shedding control command through a mobile communication network for outputting;
at least one timer server, which is connected to the communication interface in order to provide, through the communication interface, standard time data to the control center server to enable time calibration, timing synchronization, and time recording as a reference for the control center server to issue the load-shedding control command; and
at least one global positioning system, which is connected to the timer server to provide accurate timing to the timer server.

In the above mobile communication based low-relay distributive power generation system assisting service device according to the present invention, the predetermined tolerable underfrequency value to which the frequency of the AC grid power source to which the frequency signal received by the control center server of the control center corresponds lowers is 59.7 Hz.

In the above mobile communication based low-relay distributive power generation system assisting service device according to the present invention, the communication interface of the control center further comprises:
at least one communication module, which is connected to the control center server of the control center and the timer server to receive the load-shedding control command output from the control center server and to allow the timer server to provide the standard time data to the control center server; and
at least one modem, which is connected to the communication module and the mobile communication network to transmit the load-shedding control command received by the communication module through the mobile communication network for outputting.

In the above mobile communication based low-relay distributive power generation system assisting service device according to the present invention, the communication module of the communication interface of the control center comprises an input/output interface circuit having a function of optical/electrical communication.

In the above mobile communication based low-relay distributive power generation system assisting service device according to the present invention, the modem of the communication interface of the control center comprises a wireless/wired modem.

In the above mobile communication based low-relay distributive power generation system assisting service device according to the present invention, the mobile communication network to which the control center is connected is formed of a 4G the mobile communication network.

In the above mobile communication based low-relay distributive power generation system assisting service device according to the present invention, the mobile communication network to which the control center is connected is formed of a 5G the mobile communication network.

In the above mobile communication based low-relay distributive power generation system assisting service device according to the present invention, the load-shedding control station of the load-shedding service user end comprises a mobile communication base station.

In the above mobile communication based low-relay distributive power generation system assisting service device according to the present invention, each load-shedding control station of the load-shedding service user end comprises:
at least one mobile communication module, which receives the load-shedding control command output from the communication interface of the control center through the mobile communication network;
at least one remote monitoring station controller, which is connected to the mobile communication module to outputs a power control signal of the remote monitoring station controller based on operation and determination made on the load-shedding control command to carry out the corresponding load-shedding control operation;
at least one digital input/output module, which is connected to the remote monitoring station controller to output the power control signal of the remote monitoring station controller;
at least one electricity meter, which is connected to at least one local feeder grid power source and the digital input/output module to introduce metering measurement of the local feeder grid power source and to provide a signal of electrical power measurement, load shedding or load recovery of the local feeder grid power source through the digital input/output module to the remote monitoring station controller;
at least one circuit breaker, which is connected to the digital input/output module and to receive output of the digital input/output module for the load-shedding power control signal from the remote monitoring station controller so as to perform a corresponding closing control of the circuit breaker to further control cutback load shedding of the local feeder grid power source; and
at least one backup power source device, which is connected to the remote monitoring station controller, the circuit breaker, and the user loading, to perform, according to the load-shedding power control signal output from the remote monitoring station controller, supply of the backup power from the backup power source device to the remote monitoring station controller and the user loading in a cutback load-shedding condition of the circuit breaker, or control of the local feeder grid power source to supply the local feeder grid power source to the remote monitoring station controller and the user loading, and also, to supply, at the same time, charging power to the backup power source device in a non-cutback load shedding condition of the circuit breaker.

In the above mobile communication based low-relay distributive power generation system assisting service device according to the present invention, the mobile communication module of the load-shedding control station of the load-shedding service user end comprises a mobile communication module involving a function of global positioning system.

In the above mobile communication based low-relay distributive power generation system assisting service device according to the present invention, the electricity meter of the load-shedding control station of the load-shedding service user end comprises a smart meter.

In the above mobile communication based low-relay distributive power generation system assisting service device according to the present invention, the circuit breaker of the load-shedding control station of the load-shedding service user end comprises a power relay.

In the above mobile communication based low-relay distributive power generation system assisting service device according to the present invention, the backup power source device of the load-shedding control station of the load-shedding service user end comprises:
at least one energy storage device, which provides a function of electrical charging, discharging and energy storage and backup power source; and
at least one power management device, which is connected to the remote monitoring station controller, the circuit breaker, the user loading, and the energy storage device to perform, according to the load-shedding power control signal output from the remote monitoring station controller, control of the energy storage device to supply the backup power to the remote monitoring station controller and the user loading in the cutback load-shedding condition of the circuit breaker, or control of the local feeder grid power source to supply the local feeder grid power source to the remote monitoring station controller and the user loading, and also, to supply, at the same time, charging power to the energy storage device in the non-cutback load shedding condition of the circuit breaker.

In the above mobile communication based low-relay distributive power generation system assisting service device according to the present invention, the energy storage device of the backup power source device is formed of a lithium battery set.

In the above mobile communication based low-relay distributive power generation system assisting service device according to the present invention, the power management device of the backup power source device has power conversion and management functions for DC-to-DC conversion, AC-to-DC conversion, and AC-to-AC conversion.

The present invention also provides a mobile communication based low-delay distributive power generation system assisting service method, which comprises the following steps:
(a) a control center and each load-shedding control station of a load-shedding service user end performing simultaneously synchronization of timing, in which at least one timer server of a control center and at least one remote monitoring station controller of at least one load-shedding control station of the load-shedding service user end perform simultaneously timing synchronization;
(b) a frequency detector of the control center detecting a frequency of a commercial power source, in which a frequency detector of the control center of Step (a) carries out detection on a frequency of an AC grid power source at the control center side;
(c) determining whether to carry out immediate load shedding or not? if yes, executing Step (d), and if no, repeating Step (b), in which, according to a result of detection that is performed by the frequency detector of the control center of Step (b) on the frequency of the AC grid power source at the control center side, so that if the frequency of the AC grid power source lowers to a predetermined tolerable underfrequency value, then a load-shedding operation is implemented, otherwise no load-shedding operation is implemented;
(d) the control center generating at least one load-shedding control command transmitted to at least one load-shedding control station of the load-shedding service user end, in which according to an actual power dispatch operation state, the control center of Step (b) issues at least one load-shedding control command to at least one load-shedding control station of the load-shedding service user end of Step (a);
(e) the at least one load-shedding control station of the load-shedding service user end receiving the load-shedding control command, in which the remote monitoring station controller of the at least one load-shedding control station of the load-shedding service user end of Step (d) receives the load-shedding control command;
(f) the remote monitoring station controller performing an instantaneous operation to determine whether to do load-shedding to the corresponding local feeder grid power source or not? if yes, executing Step (g), and if no, executing Step (h), in which the remote monitoring station controller of the at least one load-shedding control station of the load-shedding service user end of Step (e) performs an operation to determine whether the power capacity of backup power source device is greater than a desired load-shedding threshold of an electricity provider for a local feeder grid power source, wherein for the power capacity of backup power source device being greater than the desired load-shedding threshold of the electricity provider, a load-shedding operation is implemented, and otherwise, no load-shedding operation is implemented;
(g) a digital output module of the remote control station making a circuit braker of a corresponding local feeder power source performing cutback load shedding according to the load-shedding control command, in which the remote monitoring station controller of each load-shedding control station of the load-shedding service user end of Step (e) controls a circuit breaker to cut back for load-shedding of a corresponding local feeder grid power source; and
(h) the remote monitoring station controller of each load-shedding control station of the load-shedding service user end reporting back a result of the load-shedding operation, in which the remote monitoring station controller of each load-shedding control station of the load-shedding service user end of Step (g) reports, through the mobile communication module and the mobile communication network, a result of the load-shedding operation back to a control center server of the control center.

In the above mobile communication based low-delay distributive power generation system assisting service method according to the present invention, the control center generating at least one load-shedding control command transmitted to at least one load-shedding control station of the load-shedding service user end of Step (d) further comprises the following steps:
(d1) the control center connecting the wireless remote monitoring station controllers of a plurality of load-shedding control stations of the load-shedding service user end, wherein the control center makes connection with the remote monitoring station controllers of the plurality of load-shedding control stations of the load-shedding service user end by means of the mobile communication network;
(d2) determining the mobile communication network successfully making the connection or not? in which it is determined whether the control center of Step (d1) is set in connection with the remote monitoring station controllers of the plurality of load-shedding control stations of the load-shedding service user end through the mobile communication network or not? if yes, executing Step (d3), and if no, repeating Step (d1);
(d3) the control center collecting a loading state, a sheddable amount of power, and a power dispatchable state for each remote monitoring station controller of the plurality of load-shedding control stations of each load-shedding service user end, in which the control center of Step (d1) makes connection with the remote monitoring station controllers of the plurality of load-shedding control stations of the load-shedding service user end through the mobile communication network to acquire shedding parameters and factors, including a loading state of each remote monitoring station controller and a sheddable amount of power and a power dispatchable state (including already shed, sheddable, and unsheddable) of a local feeder grid power source;
(d4) making calculation to determine whether a demand for a dispatchable total power is greater than an underfrequency load-shedding threshold desired by an electricity provider or not? if yes, executing Step (d5), and if no, repeating Step (d3), in which the control center server of the control center of Step (d3) operates and calculates to determine if a total load-shedding power amount for the remote monitoring station controllers of the plurality of load-shedding control stations of the load-shedding service user end that are connected to the local feeder grid power source is greater than an underfrequency load-shedding power amount threshold desired by the electricity provider of the AC grid power source and the local feeder grid power source;
(d5) the control center server calculating dispatchable sections of the remote monitoring station controller and a dispatching sequence of priority sectionized load shedding, in which the control center server of the control center of Step (d4) calculates and determines dispatchable sections of the remote monitoring station controller and the dispatching sequence of priority sectionized load shedding;
(d6) the control center server issuing a dispatching instruction to the remote monitoring station controllers according to the dispatching sequence to carry out the load-shedding operation, in which the control center server of the control center issues the load-shedding control command to the corresponding remote monitoring station controller to carry out the corresponding load-shedding operation according to the dispatchable sections of the remote monitoring station controller and the dispatching sequence of priority sectionized load shedding calculated in Step (d5);
(d7) the control center server waiting for load-shedding result and gathering statistics to determine if a load-shedding amount successfully satisfy a load-shedding condition? if yes, executing Step (d8), and if no, repeating Step (d3), in which the control center server of the control center of Step (d6) gathers statistics to determine if the load-shedding operation corresponding to the remote monitoring station controller is completely successful and if the amount satisfies the load shedding condition;
(d8) the control center server inspecting if over-shedding exceeds 105%? if yes, executing Step (d9), and if no, repeating Step (d5), in which the control center server of the control center of Step (d7) inspects if the capacity of each local feeder grid power source that is subject to load shedding for the remote monitoring station controller that has been successfully shed in Step (d7) exceeds 105%; and
(d9) recovering power for that exceeding 105% load shedding amount and recording completeness of dispatching, in which the control center server of the control center of Step (d8) issues a part unshed power recovery command to the remote monitoring station controller of Step (d8) to carry out recovery amount for each local feeder grid power source, in order to maintain the capacity of load shedding at 105%, and the control center server of the control center makes a record that the dispatching of load shedding is completed.

The mobile communication based low-relay distributive power generation system assisting service device and method according to the present invention have the efficacy that the load-shedding control operation mode between the control center and each load-shedding control station of the load-shedding service user end allows each load-shedding control station of the load-shedding service user end to become a voluntary and contracted power frequency underfrequency load-shedding user, such as applications of constantly 24-hours loading, for example mobile communication base stations, claw machines, and unmanned convenience stores, initiating collaboration with the electricity provider of the local feeder grid power source of the AC grid power source and each load-shedding control station in non-specified time intervals or off-peak period to voluntarily become power underfrequency load-shedding users when the frequency of the AC grid power source drops to a predetermined tolerable underfrequency value, achieving flexibility and modifiability of dispatching of the load-shedding capacity and amount for the control center, and transmission of the load-shedding control command and reporting of statistics of the load-shedding capacity and amount and result between the control center and each load-shedding control station of each load-shedding service user end carried out by means of a mobile communication network make it possible to ensure accuracy of the load-shedding capacity and the load-shedding result of each load-shedding control station of each load-shedding service user end of the local feeder grid power source, ensuring the underfrequency load-shedding time meets the requirement of less than one second. Further, it only needs to arranged one single frequency detector on the control center to enable detection of an underfrequency condition of the AC grid power source for instantaneously issuing the load-shedding control command to carry out a load-shedding operation, thereby greatly reducing the load-shedding installation cost and human labor. Further, each load-shedding control station of each load-shedding service user end is provided therein with at least one backup power source device, so that there is no unexpected widespread blackout when the control center issues the load-shedding control command in an underfrequency condition of the AC grid power source, so as to absolutely cause no trouble of power consumption to each load-shedding control station of each load-shedding service user end. Further, an effect of win-win may be realized between each load-shedding control station of each load-shedding service user end and the AC grid power source provider to thereby further improve the economic performance of the present invention and completely eliminating the problems and shortcomings of the prior art underfrequency load shedding and those of the previously discussed patent documents that the installation cost is high and load shedding may cause unexpected widespread blackouts.

### BRIEF DESCRIPTION OF THE DRAWINGS

FIG. 1 is a system block diagram showing a mobile communication based low-delay distributive power generation system assisting service device according to a first embodiment of the present invention;
FIG. 2 is a system block diagram showing a mobile communication based low-delay distributive power generation system assisting service device according to a second embodiment of the present invention;
FIG. 3 is a flow chart illustrating a mobile communication based low-delay distributive power generation system assisting service method according to the present invention; and
FIG. 4 is a flow chart illustrating a control center generating at least one load-shedding control command transmitted to at least one load-shedding control station of a load-shedding service user end in the mobile communication based low-delay distributive power generation system assisting service method according to the present invention.

### DETAILED DESCRIPTION OF THE PREFERRED EMBODIMENTS

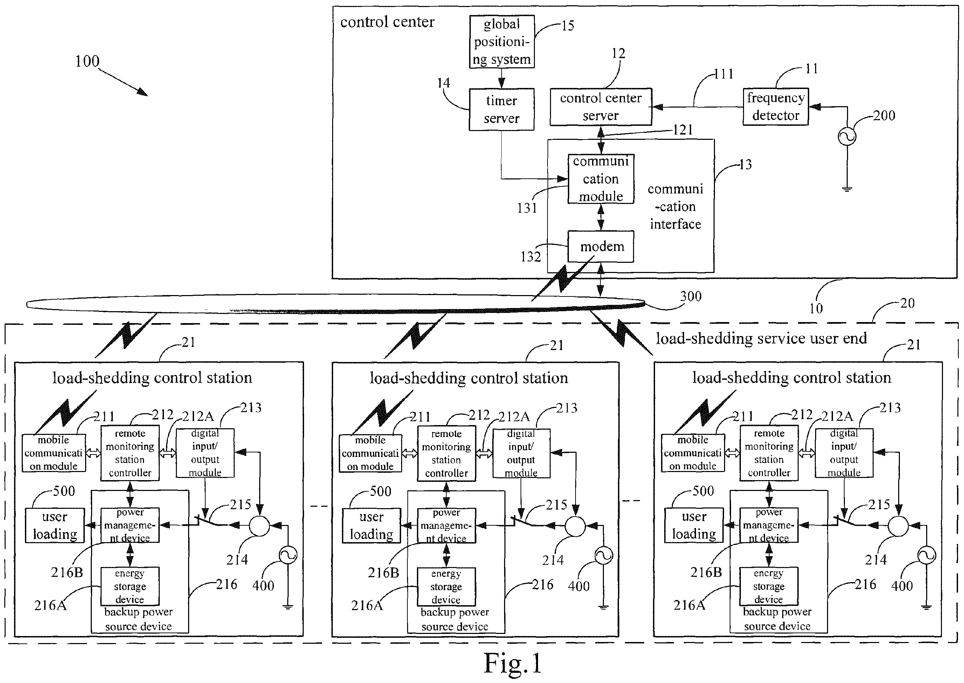

Referring FIG. 1, a mobile communication based low-relay distributive power generation system assisting service device according to a first embodiment of the present invention is provided, wherein the device 100 comprises at least one control center 10. The control center 10 is not limited to any specific type, and one that comprises a frequency detector 11, at least one control center server 12, a communication interface 13, at least one timer server 14, and at least one global positioning system 15 is taken as an example in the present invention, wherein the frequency detector 11 is connected to an alternate-current (AC) grid power source 200 to detect a frequency of the AC grid power source 200 and outputs a frequency signal 111.

The control center server 12 is connected to the frequency detector 11 to receive the frequency signal 111 output from the frequency detector 11, such that when the frequency of the AC grid power source 200 to which the frequency signal 111 corresponds drops to a predetermined tolerable underfrequency value, such as the frequency of the AC grid power source 200 being lowered to 59.7 Hz, the control center server 12 outputs at least one load-shedding control command 121.

The communication interface 13 is not limited to any specific type, and one that comprises at least one communication module 131 and a modem 132 is taken as an example in the present invention. The communication module 131 is connected to the control center server 12 to receive the load-shedding control command 121 output from the control center server 12. The modem 132 is connected to the communication module 131 and at least one mobile communication network 300 to transmit and output the load-shedding control command 121 received in the communication module 131 by way of the mobile communication network 300. An example of the communication module 131 of the communication interface 13 is an input/output interface circuit having an optical/electrical communication function, and an example of the modem 132 can be a wireless/wired modem. The mobile communication network 300 is not limited to any specific type, and a structure including a 4G the mobile communication network or a 5G the mobile communication network is taken as an example in the present invention.

The timer server 14 is connected to the communication module 131 of the communication interface 13 in order to provide, by means of the communication module 131 of the communication interface 13, standard time data to the control center server 12 to enable operation time calibration, timing synchronization, and time recording as a reference for the control center server 12 to issue the load-shedding control command 121.

The global positioning system 15 is connected to the timer server 14 to provide accurate timing to the timer server 14.

At least one load-shedding service user end 20 is involved. The load-shedding service user end 20 is not limited to any specific type, and a mobile communication base station operator is taken as an example in the present invention. The load-shedding service user end 20 includes at least one load-shedding control station 21. Each such load-shedding control station 21 is not limited to any specific type, and a mobile communication base station is taken as an example in the present invention, which comprises at least one mobile communication module 211, at least one remote monitoring station controller 212, at least one digital input/output module 213, at least one electricity meter 214, at least one circuit breaker 215, and at least one backup power source device 216, wherein the mobile communication module 211 receives the load-shedding control command 121 output from the modem 132 of the communication interface 13 of the control center 10 through the mobile communication network 300. The mobile communication module 211 is not limited to any specific type, and a mobile communication module involving a function of global positioning system is taken as an example in the present invention.

The remote monitoring station controller 212 is connected to the mobile communication module 211 to provide a power control signal 212A based on operation and determination made on the load-shedding control command 121 to carry out respective connection and control for the corresponding load-shedding control operation.

The digital input/output module 213 is connected to the remote monitoring station controller 212 for outputting of the power control signal 212A from the remote monitoring station controller.

The electricity meter 214 is connected to at least one local feeder grid power source 400 and the digital input/output module 213 to introduce metering measurement of the local feeder grid power source 400 and to provide a signal of load shedding or load recovery of the local feeder grid power source 400 through the digital input/output module 213 for feeding to the remote monitoring station controller 212. The electricity meter 214 is not limited to any specific type, and a smart meter is taken as an example in the present invention.

The circuit breaker 215 is connected to the digital input/output module 213 and to receive output of the digital input/output module 213 for the power control signal 212A for load shedding from the remote monitoring station controller 212 so as to perform a corresponding closing control of the circuit breaker 215 to further control cutback load shedding of the local feeder grid power source 400. The circuit breaker 215 is not limited to any specific type, and a power relay is taken as an example in the present invention.

The backup power source device 216 is not limited to any specific type, and one that includes at least one energy storage device 216A and at least one power management device 216B is taken as an example in the present invention, wherein the energy storage device 216A provides a function of electric charging, discharging and energy storage and backup power source. The energy storage device 216A is not limited to any specific type, and a lithium battery set is taken as an example in the present invention. The power management device 216B has power conversion and management functions for DC-to-DC conversion, AC-to-DC conversion, and AC-to-AC conversion. The power management device 216B is connected to the remote monitoring station controller 212, the circuit breaker 215, at least one user loading 500, and the energy storage device 216A, in order to perform, according to the power control signal 212A for load shedding output from the remote monitoring station controller 212, control of the energy storage device 216A to supply the backup power to the remote monitoring station controller 212 and the user loading 500 in a cutback load-shedding condition of the circuit breaker 215, or control of the local feeder grid power source 400 to supply the local feeder grid power source 400 to the remote monitoring station controller 212 and the user loading 500, and also, to supply, at the same time, charging power to the energy storage device 216B in a non-cutback load shedding condition of the circuit breaker 215.

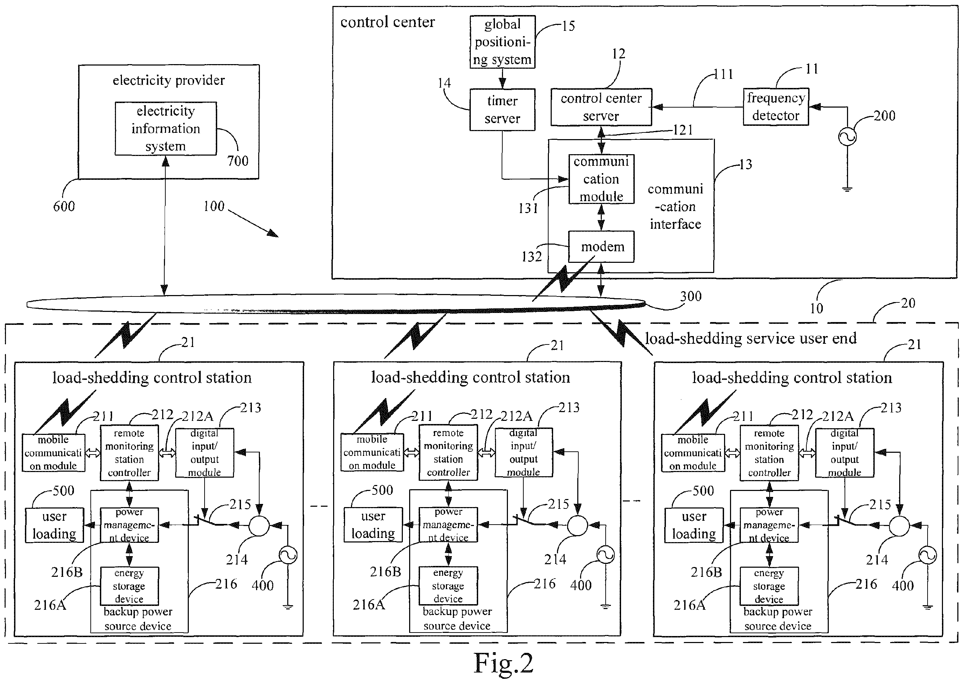

Referring to FIG. 2, a mobile communication based low-relay distributive power generation system assisting service device according to a second embodiment of the present invention is provided, wherein an electricity provider 600, such as an electricity company, for the AC grid power source 200 and the local feeder grid power source 400 is shown and includes at least one electricity information system 700 that is connected, through the mobile communication network 300, to the control center 10 and each load-shedding control station 21 of the load-shedding service user end 20, in order to acquire, in a simple and accurate way, and monitor the time that the control center 10 issues the load-shedding control command 121, the result of load shedding, and the shed power capacity, and a remote load shedding performance condition of each load-shedding control station 21 of the load-shedding service user end 20, to thereby effectively reduce the labor and cost of management, and also to serve as a basis for compensation and reward of voluntary load shedding between the electricity provider 600 and a load-shedding service user end 20 that is contracted for voluntary underfrequency load shedding, such as between the electricity company and the mobile communication base station, achieving an win-win effect for both sides and thus further improving the industrial value of the present invention.

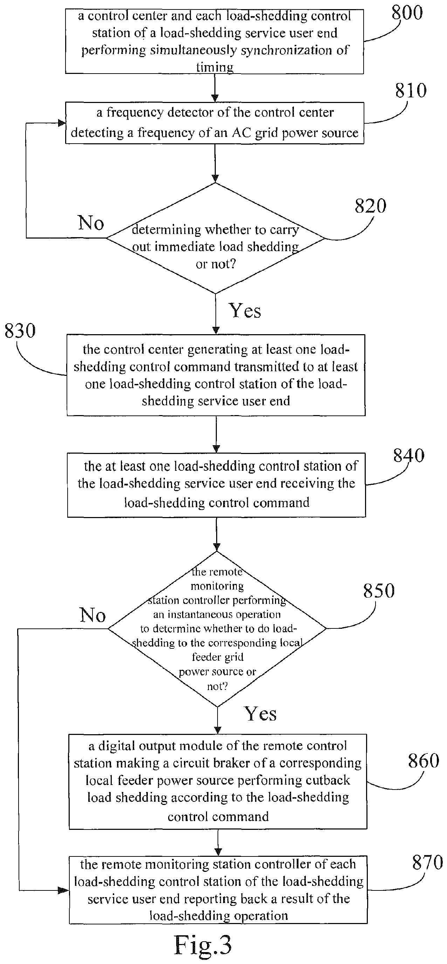

Referring to FIG. 3, a flow chart of a mobile communication based low-delay distributive power generation system assisting service method according to the present invention is shown, comprising Steps 800-870, wherein:
(800) a control center and each load-shedding control station of a load-shedding service user end performing simultaneously synchronization of timing, in which a timer server 14 of a control center 10 and at least one remote monitoring station controller 212 of at least one load-shedding control station 21 of the load-shedding service user end 20 perform simultaneously timing synchronization;
(810) a frequency detector of the control center detecting a frequency of an AC grid power source, in which a frequency detector 11 of the control center 10 of Step (800) carries out detection on the frequency of the AC grid power source 200 at the control center 10 side;
(820) determining whether to carry out immediate load shedding or not? if yes, executing Step (830), and if no, repeating Step (810), in which, according to the result of detection that is performed by the frequency detector 11 of the control center 10 of Step (810) on the frequency of the AC grid power source 200 at the control center 10 side, so that if the frequency of the AC grid power source 200 lowers to a predetermined tolerable underfrequency value, for example lowering to 59.7 Hz, then a load-shedding operation is implemented, otherwise no load-shedding operation is implemented;
(830) the control center generating at least one load-shedding control command transmitted to at least one load-shedding control station of the load-shedding service user end, in which according to an actual power dispatch operation state, the control center 10 issues at least one load-shedding control command 121 to at least one load-shedding control station 21 of the load-shedding service user end 20;
(840) the at least one load-shedding control station of the load-shedding service user end receiving the load-shedding control command, in which the remote monitoring station controller 212 of the at least one load-shedding control station 21 of the load-shedding service user end 20 of Step (830) receives the load-shedding control command 121;
(850) the remote monitoring station controller performing an instantaneous operation to determine whether to do load-shedding to the corresponding local feeder grid power source or not? if yes, executing Step (860), and if no, executing Step (870), in which the remote monitoring station controller 212 of the at least one load-shedding control station 21 of the load-shedding service user end 20 of Step (830) performs an operation to determine whether the power capacity of backup power source device is greater than for example a desired load-shedding threshold of an electricity provider for a local feeder grid power source 400, wherein for the power capacity of backup power source device being greater than the desired load-shedding threshold of the electricity provider 400, a load-shedding operation is implemented, and otherwise, no load-shedding operation is implemented;
(860) a digital output module of the remote control station making a circuit braker of a corresponding local feeder power source performing cutback load shedding according to the load-shedding control command, in which the remote monitoring station controller 212 of each load-shedding control station 21 of the load-shedding service user end 20 of Step (840) controls a circuit breaker 215 to cut back for load-shedding of a corresponding local feeder grid power source 400; and
(870) the remote monitoring station controller of each load-shedding control station of the load-shedding service user end reporting back a result of the load-shedding operation, in which the remote monitoring station controller 212 of each load-shedding control station 21 of the load-shedding service user end 20 of Step (860) reports, through the mobile communication module 211 and the mobile communication network 400, a result of the load-shedding operation back to a control center server 12 of the control center 10.

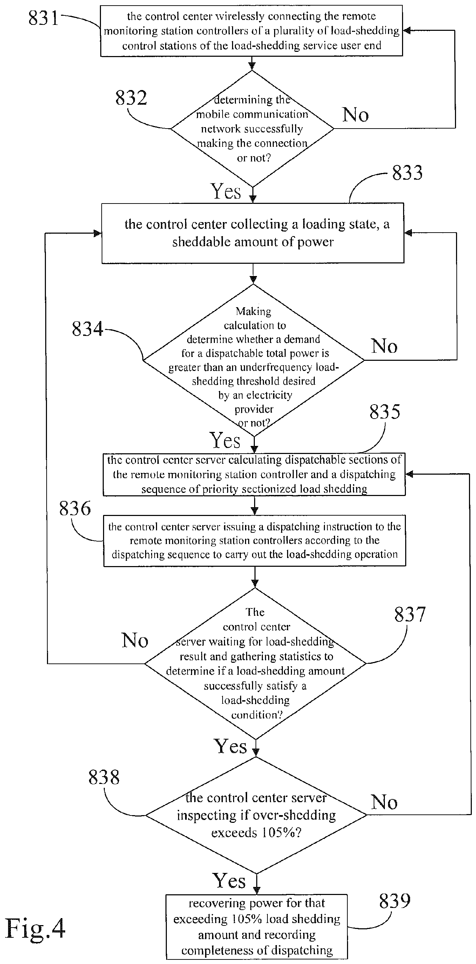

Referring to FIG. 4, a flow chart is provided to illustrate a control center generating at least one load-shedding control command transmitted to at least one load-shedding control station of a load-shedding service user end in the mobile communication based low-delay distributive power generation system assisting service method according to the present invention, this being a detailed flow chart for the operation performed in Step (830) of FIG. 3, and comprising Step (831)-(839), wherein:
(831) the control center connecting the wireless remote monitoring station controllers of a plurality of load-shedding control stations of the load-shedding service user end, wherein the control center 10 makes connection with the remote monitoring station controllers 212 of the plurality of load-shedding control stations 21 of the load-shedding service user end 20 by means of the mobile communication network 300;
(832) determining the mobile communication network successfully making the connection or not? in which it is determined whether the control center 10 of Step (831) is set in connection with the remote monitoring station controllers 212 of the plurality of load-shedding control stations 21 of the load-shedding service user end 20 through the mobile communication network 300 or not? if yes, executing Step (833), and if no, repeating Step (831);
(833) the control center collecting a loading state, a sheddable amount of power, and a power dispatchable state for each remote monitoring station controller of the plurality of load-shedding control stations of each load-shedding service user end, in which the control center 10 of Step (831) makes connection with the remote monitoring station controllers 212 of the plurality of load-shedding control stations 21 of the load-shedding service user end 20 through the mobile communication network 300 to acquire shedding parameters and factors, including a loading state of each remote monitoring station controller 212 and a sheddable amount of power and a power dispatchable state (including already shed, sheddable, and unsheddable) of a local feeder grid power source 400;
(834) making calculation to determine whether a demand for a dispatchable total power is greater than an underfrequency load-shedding threshold desired by an electricity provider or not? if yes, executing Step (835), and if no, repeating Step (833), in which the control center server 12 of the control center 10 of Step (833) operates and calculates to determine if a total load-shedding power amount for the remote monitoring station controllers 212 of the plurality of load-shedding control stations 21 of the load-shedding service user end 20 that are connected to the local feeder grid power source 400 is greater than an underfrequency load-shedding power amount threshold desired by the electricity provider 600 of the AC grid power source 200 and the local feeder grid power source 400;
(835) the control center server calculating dispatchable sections of the remote monitoring station controller and a dispatching sequence of priority sectionized load shedding, in which the control center server 12 of the control center 10 of Step (834) calculates and determines dispatchable sections of the remote monitoring station controller 21 and the dispatching sequence of priority sectionized load shedding;
(836) the control center server issuing a dispatching instruction to the remote monitoring station controllers according to the dispatching sequence to carry out the load-shedding operation, in which the control center server 12 of the control center 10 issues the load-shedding control command to the corresponding remote monitoring station controller 212 to carry out the corresponding load-shedding operation according to the dispatchable sections of the remote monitoring station controller 212 and the dispatching sequence of priority sectionized load shedding calculated in Step (835);
(837) the control center server waiting for load-shedding result and gathering statistics to determine if a load-shedding amount successfully satisfy a load-shedding condition? if yes, executing Step (838), and if no, repeating Step (833), in which the control center server 12 of the control center 10 of Step (836) gathers statistics to determine if the load-shedding operation corresponding to the remote monitoring station controller 212 is completely successful? and if the amount satisfies the load shedding condition?
(838) the control center server inspecting if over-shedding exceeds 105%? if yes, executing Step (839), and if no, repeating Step (835), in which the control center server 12 of the control center 10 of Step (837) inspects if the capacity of each local feeder grid power source 400 that is subject to load shedding for the remote monitoring station controller 212 that has been successfully shed in Step (837) exceeds 105%;
(839) recovering power for that exceeding 105% load shedding amount and recording completeness of dispatching, in which the control center server 12 of the control center 10 of Step (838) issues a part unshed power recovery command to the remote monitoring station controller 212 of Step (838) to carry out recovery amount for each local feeder grid power source 400, in order to maintain the capacity of load shedding at 105%, and the control center server 12 of the control center 10 makes a record that the dispatching of load shedding is completed.

Step (800) - (870) and Step (831) - (839) of the mobile communication based low-delay distributive power generation system assisting service method shown in FIGS. 3 and 4 can be implemented as a control program or control software, and can be burnt in and loaded in the control center server 12 of the control center 10 and the remote monitoring station controllers 212 of the plurality of load-shedding control stations 21 of the load-shedding service user end 20 in advance.

In Step (800)-(870) and Step (831)-(839) of the mobile communication based low-delay distributive power generation system assisting service method shown in FIGS. 3 and 4, the control center server 12 of the control center 10 is operable to carry out a load-shedding blackout control operation procedure on each local feeder grid power source 400 of the remote monitoring station controllers 212 of the plurality of load-shedding control stations 21 of the load-shedding service user end 20, and similarly, a similar procedure may be carried out by the control center server 12 of the control center 10 on each local feeder grid power source 400 of the remote monitoring station controllers 212 of the plurality of load-shedding control stations 21 of the load-shedding service user end 20 for power recovery step by step and to maintain the power frequency and power supply stability of the AC grid power source 200 and each local feeder grid power source 400.

The mobile communication based low-relay distributive power generation system assisting service device and method according to the present invention are shown in FIGS. 1-4, wherein the description and drawings are provided for easy explanation of the technical contents and technical measures of the present invention, and the preferred embodiments so described provide only a fraction of the present invention and are not intended for constraining the scope thereof, and further any equivalent substitute and modification of structure and component of the details of the present invention are considered failing within the scope of the present invention as defined solely by the appended claims.

## Claims

1. A mobile communication based low-relay distributive power generation system assisting service device, comprising:
at least one control center, which comprises a time server, a control center server, a frequency detector and at least one communication interface, wherein the frequency detector is connected to an alternate-current (AC) grid power source to detect a frequency of the AC grid power source, so that when the frequency of the AC grid power source lowers to a predetermined tolerable underfrequency value, and then the control center server carries out load-shedding control command, the communication interface issues, through at least one mobile communication network, at least one load-shedding control command; and
at least one load-shedding service user end, wherein the load-shedding service user end comprises at least one load-shedding control station, each load-shedding control station being connected to and controlling power supply and circuit breaker for at least one local feeder grid power source of user loading, each load-shedding control station comprising at least one mobile communication module and a backup power source device, so that the mobile communication module is operable to receive the load-shedding control command from the control center and to implement immediate and low-delay cutback load-shedding on the at least one local feeder grid power source for the user loading connected thereto, and allowing the backup power source device to supply electric power to the user loading.

2. The mobile communication based low-relay distributive power generation system assisting service device according to claim 1, wherein the control center further comprises:
a frequency detector, which is connected to the AC grid power source to detect the frequency of the AC grid power source and output a frequency signal;
at least one control center server, which is connected to the frequency detector to receive the frequency signal output from the frequency detector, wherein when the frequency of the AC grid power source to which the frequency signal corresponds lowers to the predetermined tolerable underfrequency value, the control center server outputs at least one load-shedding control command;
at least one communication interface, which is connected to the control center server to receive the load-shedding control command output from the control center server and to transmit the load-shedding control command through a mobile communication network for outputting;
at least one timer server, which is connected to the communication interface in order to provide, through the communication interface, standard time data to the control center server to enable time calibration, timing synchronization, and time recording as a reference for the control center server to issue the load-shedding control command; and
at least one global positioning system, which is connected to the timer server to provide accurate timing to the timer server.

3. The mobile communication based low-relay distributive power generation system assisting service device according to claim 2, wherein the predetermined tolerable underfrequency value to which the frequency of the AC grid power source to which the frequency signal received by the control center server of the control center corresponds lowers is 59.7 Hz.

4. The mobile communication based low-relay distributive power generation system assisting service device according to claim 2, wherein the communication interface of the control center further comprises:
at least one communication module, which is connected to the control center server of the control center and the timer server to receive the load-shedding control command output from the control center server and to allow the timer server to provide the standard time data to the control center server; and
at least one modem, which is connected to the communication module and the mobile communication network to transmit the load-shedding control command received by the communication module through the mobile communication network for outputting.

5. The mobile communication based low-relay distributive power generation system assisting service device according to claim 4, wherein the communication module of the communication interface of the control center comprises an input/output interface circuit having a function of optical/electrical communication.

6. The mobile communication based low-relay distributive power generation system assisting service device according to claim 4, wherein the modem of the communication interface of the control center comprises a wireless/wired modem.

7. The mobile communication based low-relay distributive power generation system assisting service device according to claim 1, wherein the mobile communication network to which the control center is connected is formed of a 4G the mobile communication network.

8. The mobile communication based low-relay distributive power generation system assisting service device according to claim 1, wherein the mobile communication network to which the control center is connected is formed of a 5G the mobile communication network.

9. The mobile communication based low-relay distributive power generation system assisting service device according to claim 1, wherein the load-shedding control station of the load-shedding service user end comprises a mobile communication base station.

10. The mobile communication based low-relay distributive power generation system assisting service device according to claim 1, wherein each load-shedding control station of the load-shedding service user end comprises:
at least one mobile communication module, which receives the load-shedding control command output from the communication interface of the control center through the mobile communication network;
at least one remote monitoring station controller, which is connected to the mobile communication module to outputs a power control signal of the remote monitoring station controller based on operation and determination made on the load-shedding control command to carry out the corresponding load-shedding control operation;
at least one digital input/output module, which is connected to the remote monitoring station controller to output the power control signal of the remote monitoring station controller;
at least one electricity meter, which is connected to at least one local feeder grid power source and the digital input/output module to introduce metering measurement of the local feeder grid power source and to provide a signal of electrical power measurement, load shedding or load recovery of the local feeder grid power source through the digital input/output module to the remote monitoring station controller;
at least one circuit breaker, which is connected to the digital input/output module and to receive output of the digital input/output module for the load-shedding power control signal from the remote monitoring station controller so as to perform a corresponding closing control of the circuit breaker to further control cutback load shedding of the local feeder grid power source; and
at least one backup power source device, which is connected to the remote monitoring station controller, the circuit breaker, and the user loading, to perform, according to the load-shedding power control signal output from the remote monitoring station controller, supply of the backup power from the backup power source device to the remote monitoring station controller and the user loading in a cutback load-shedding condition of the circuit breaker, or control of the local feeder grid power source to supply the local feeder grid power source to the remote monitoring station controller and the user loading, and also, to supply, at the same time, charging power to the backup power source device in a non-cutback load shedding condition of the circuit breaker.

11. The mobile communication based low-relay distributive power generation system assisting service device according to claim 10, wherein the mobile communication module of the load-shedding control station of the load-shedding service user end comprises a mobile communication module involving a function of global positioning system.

12. The mobile communication based low-relay distributive power generation system assisting service device according to claim 10, wherein the electricity meter of the load-shedding control station of the load-shedding service user end comprises a smart meter.

13. The mobile communication based low-relay distributive power generation system assisting service device according to claim 10, wherein the circuit breaker of the load-shedding control station of the load-shedding service user end comprises a power relay.

14. The mobile communication based low-relay distributive power generation system assisting service device according to claim 10, wherein the backup power source device of the load-shedding control station of the load-shedding service user end comprises:
at least one energy storage device, which provides a function of electrical charging, discharging and energy storage and backup power source; and
at least one power management device, which is connected to the remote monitoring station controller, the circuit breaker, the user loading, and the energy storage device to perform, according to the load-shedding power control signal output from the remote monitoring station controller, control of the energy storage device to supply the backup power to the remote monitoring station controller and the user loading in the cutback load-shedding condition of the circuit breaker, or control of the local feeder grid power source to supply the local feeder grid power source to the remote monitoring station controller and the user loading, and also, to supply, at the same time, charging power to the energy storage device in the non-cutback load shedding condition of the circuit breaker.

15. The mobile communication based low-relay distributive power generation system assisting service device according to claim 14, wherein the energy storage device of the backup power source device is formed of a lithium battery set.

16. The mobile communication based low-relay distributive power generation system assisting service device according to claim 14, wherein the power management device of the backup power source device has power conversion and management functions for DC-to-DC conversion, AC-to-DC conversion, and AC-to-AC conversion.

17. A mobile communication based low-delay distributive
power generation system assisting service method, comprising the following steps:
(a) a control center and each load-shedding control station of a load-shedding service user end performing simultaneously synchronization of timing, in which at least one timer server of a control center and at least one remote monitoring station controller of at least one load-shedding control station of the load-shedding service user end perform simultaneously timing synchronization;
(b) a frequency detector of the control center detecting a frequency of a AC grid power source, in which a frequency detector of the control center of Step (a) carries out detection on a frequency of an AC grid power source at the control center side;
(c) determining whether to carry out immediate load shedding or not? if yes, executing Step (d), and if no, repeating Step (b), in which, according to a result of detection that is performed by the frequency detector of the control center of Step (b) on the frequency of the AC grid power source at the control center side, so that if the frequency of the AC grid power source lowers to a predetermined tolerable underfrequency value, then a load-shedding operation is implemented, otherwise no load-shedding operation is implemented;
(d) the control center generating at least one load-shedding control command transmitted to at least one load-shedding control station of the load-shedding service user end, in which according to an actual power dispatch operation state, the control center of Step (b) issues at least one load-shedding control command to at least one load-shedding control station of the load-shedding service user end of Step (a);
(e) the at least one load-shedding control station of the load-shedding service user end receiving the load-shedding control command, in which the remote monitoring station controller of the at least one load-shedding control station of the load-shedding service user end of Step (d) receives the load-shedding control command;
(f) the remote monitoring station controller performing an instantaneous operation to determine whether to do load-shedding to the corresponding local feeder grid power source or not? if yes, executing Step (g), and if no, executing Step (h), in which the remote monitoring station controller of the at least one load-shedding control station of the load-shedding service user end of Step (e) performs an operation to determine whether the power capacity of backup power source device is greater than a desired load-shedding threshold of an electricity provider for a local feeder grid power source, wherein for the power capacity of backup power source device being greater than the desired load-shedding threshold of the electricity provider, a load-shedding operation is implemented, and otherwise, no load-shedding operation is implemented;
(g) a digital output module of the remote control station making a circuit braker of a corresponding local feeder power source performing cutback load shedding according to the load-shedding control command, in which the remote monitoring station controller of each load-shedding control station of the load-shedding service user end of Step (e) controls a circuit breaker to cut back for load-shedding of a corresponding local feeder grid power source; and
(h) the remote monitoring station controller of each load-shedding control station of the load-shedding service user end reporting back a result of the load-shedding operation, in which the remote monitoring station controller of each load-shedding control station of the load-shedding service user end of Step (g) reports, through the mobile communication module and the mobile communication network, a result of the load-shedding operation back to a control center server of the control center.

18. The mobile communication based low-delay distributive power generation system assisting service method according to claim 17, wherein the control center generating at least one load-shedding control command transmitted to at least one load-shedding control station of the load-shedding service user end of Step (d) further comprises the following steps:
(d1) the control center connecting the wireless remote monitoring station controllers of a plurality of load-shedding control stations of the load-shedding service user end, wherein the control center makes connection with the remote monitoring station controllers of the plurality of load-shedding control stations of the load-shedding service user end by means of the mobile communication network;
(d2) determining the mobile communication network successfully making the connection or not? in which it is determined whether the control center of Step (d1) is set in connection with the remote monitoring station controllers of the plurality of load-shedding control stations of the load-shedding service user end through the mobile communication network or not? if yes, executing Step (d3), and if no, repeating Step (d1);
(d3) the control center collecting a loading state, a sheddable amount of power, and a power dispatchable state for each remote monitoring station controller of the plurality of load-shedding control stations of each load-shedding service user end, in which the control center of Step (d1) makes connection with the remote monitoring station controllers of the plurality of load-shedding control stations of the load-shedding service user end through the mobile communication network to acquire shedding parameters and factors, including a loading state of each remote monitoring station controller and a sheddable amount of power and a power dispatchable state (including already shed, sheddable, and unsheddable) of a local feeder grid power source;
(d4) making calculation to determine whether a demand for a dispatchable total power is greater than an underfrequency load-shedding threshold desired by an electricity provider or not? if yes, executing Step (d5), and if no, repeating Step (d3), in which the control center server of the control center of Step (d3) operates and calculates to determine if a total load-shedding power amount for the remote monitoring station controllers of the plurality of load-shedding control stations of the load-shedding service user end that are connected to the local feeder grid power source is greater than an underfrequency load-shedding power amount threshold desired by the electricity provider of the AC grid power source and the local feeder grid power source;
(d5) the control center server calculating dispatchable sections of the remote monitoring station controller and a dispatching sequence of priority sectionized load shedding, in which the control center server of the control center of Step (d4) calculates and determines dispatchable sections of the remote monitoring station controller and the dispatching sequence of priority sectionized load shedding;
(d6) the control center server issuing a dispatching instruction to the remote monitoring station controllers according to the dispatching sequence to carry out the load-shedding operation, in which the control center server of the control center issues the load-shedding control command to the corresponding remote monitoring station controller to carry out the corresponding load-shedding operation according to the dispatchable sections of the remote monitoring station controller and the dispatching sequence of priority sectionized load shedding calculated in Step (d5);
(d7) the control center server waiting for load-shedding result and gathering statistics to determine if a load-shedding amount successfully satisfy a load-shedding condition? if yes, executing Step (d8), and if no, repeating Step (d3), in which the control center server of the control center of Step (d6) gathers statistics to determine if the load-shedding operation corresponding to the remote monitoring station controller is completely successful and if the amount satisfies the load shedding condition;
(d8) the control center server inspecting if over-shedding exceeds 105%? if yes, executing Step (d9), and if no, repeating Step (d5), in which the control center server of the control center of Step (d7) inspects if the capacity of each local feeder grid power source that is subject to load shedding for the remote monitoring station controller that has been successfully shed in Step (d7) exceeds 105%; and
(d9) recovering power for that exceeding 105% load shedding amount and recording completeness of dispatching, in which the control center server of the control center of Step (d8) issues a part unshed power recovery command to the remote monitoring station controller of Step (d8) to carry out recovery amount for each local feeder grid power source, in order to maintain the capacity of load shedding at 105%, and the control center server of the control center makes a record that the dispatching of load shedding is completed.
